# EUROPÄISCHE PATENTSCHRIFT

(11) **EP 3 885 040 B1**
(45) Veröffentlichungstag und Bekanntmachung des Hinweises auf die Patenterteilung: **16.07.2025**
(21) Anmeldenummer: 20165124.7
(22) Anmeldetag: 24.03.2020
(51) Int. Cl.: B01J 29/70, B01J 29/74, B01J 29/76, C01B 39/46, B01D 53/94

(54) **AMMONIAKOXIDATIONSKATALYSATOR**
AMMONIA OXIDATION CATALYST
CATALYSEUR D'OXYDATION D'AMMONIAC

(43) Veröffentlichungstag der Anmeldung: 29.09.2021
(73) Patentinhaber: Umicore AG & Co. KG, 63457 Hanau-Wolfgang (DE)
(72) Erfinder: EICH, Andreas, 63571 Gelnhausen (DE)

(56) Entgegenhaltungen:
- DE-A1- 102014 117 672
- DE-A1- 102016 111 147
- US-A1- 2018 280 945
- US-A1- 2019 176 128

## Beschreibung

Die vorliegende Erfindung betrifft einen Ammoniakoxidationskatalysator, der einen platin- und zinkhaltigen Zeolithen umfasst, sowie seine Verwendung zur Reinigung der Abgase von mager betriebenen Verbrennungsmotoren, insbesondere Dieselmotoren.

Das Rohabgas von Dieselmotoren enthält neben Kohlenmonoxid CO, Kohlenwasserstoffen HC und Stickoxiden NOₓ einen relativ hohen Sauerstoffgehalt von bis zu 15 Vol.-%. Außerdem sind Partikelemissionen enthalten, die überwiegend aus Rußrückständen und gegebenenfalls organischen Agglomeraten bestehen und aus einer partiell unvollständigen Kraftstoffverbrennung im Zylinder herrühren.

Während Kohlenmonoxid und Kohlenwasserstoffe mittels Dieseloxidationskatalysatoren unschädlich gemacht werden können, sind zur Entfernung der Partikelemissionen Dieselpartikelfilter mit und ohne katalytisch aktive Beschichtung geeignet.

Stickoxide können beispielsweise durch selektive katalytische Reduktion (Selective Catalytic Reduction, SCR) an einem sogenannten SCR-Katalysator mit Ammoniak als Reduktionsmittel zu Stickstoff umgesetzt werden. Ammoniak kann durch Thermolyse und Hydrolyse einer in das Abgas eingespeisten Ammoniakvorläuferverbindung verfügbar gemacht werden. Beispiele für solche Vorläuferverbindungen sind Ammoniumcarbamat, Ammoniumformiat und vorzugsweise Harnstoff. Alternativ kann das Ammoniak durch katalytische Reaktionen innerhalb des Abgases gebildet werden.

Zur möglichst vollständigen Umsetzung der Stickoxide am SCR-Katalysator kann es erforderlich sein, Ammoniak in einer überstöchiometrischen Menge einzuspeisen, die in der Regel 10 bis 20% über der stöchiometrischen Menge liegt. Dies wiederum führt zu nicht umgesetztem Ammoniak im Abgas, was angesichts seiner toxischen Wirkungen und seiner Treibhausgas-Eigenschaften unerwünscht ist. Folglich werden Ammoniakemissionen in der Abgasgesetzgebung zunehmend begrenzt.

Zur Vermeidung von Ammoniakemissionen wurden bereits sogenannte Ammoniakschlupfkatalysatoren (ASC) entwickelt. Diese Katalysatoren umfassen üblicherweise einen Oxidationskatalysator zur Oxidation von Ammoniak bei möglichst niedrigen Temperaturen.

Solche Oxidationskatalysatoren umfassen in der Regel ein Edelmetall, wie beispielsweise Palladium und insbesondere Platin, auf einem Trägeroxid. Sie haben allerdings den Nachteil, Ammoniak nicht nur zu Stickstoff, Wasser und Sauerstoff, sondern auch zu schädlichen Spezies wie Distickstoffoxid (N₂O), Stickstoffmonoxid (NO) und Stickstoffdioxid (NO₂) zu oxidieren.

Es ist bekannt, die Selektivität der Ammoniakoxidation gegenüber Stickstoff durch Kombination des Oxidationskatalysators mit einem SCR-Katalysator zu verbessern. In der Regel liegen in diesem Fall die Komponenten in einer Schichtanordnung vor, wobei die SCR-Schicht normalerweise die obere Schicht bildet und auf der unten liegenden Oxidationsschicht angeordnet ist. ASC-Katalysatoren werden üblicherweise auf ein monolithisches Trägersubstrat, beispielsweise ein Durchflusssubstrat oder ein Wandflussfilter aufgetragen.

ASC Katalysatoren dieses Typs sind zum Beispiel aus EP410440A1, WO02/100520A1, EP2117702A2 und WO2010/062730A2 bekannt.

D1 (US2018/280945A1) offenbart einen Ammoniakoxidationskatalysator, der einen Zeolith umfasst [34], der Zink [34] und Platin [32] umfassen kann, und der einen zweischichtigen Aufbau aufweist, wobei alle Schichten Edelmetall aufweisen müssen. Dabei wird festgelegt, daß das Zink Bestandteil des Zeolithgerüsts ist ("heteroatom-containing aluminosilicate framework" [34]).

D2 (US2019/176128A1) offenbart einen Ammoniakoxidationskatalysator ebenfalls mit einer Oxidationskatalysatorschicht ("first catalyst coating") und einer SCR-Schicht ("second catalyst coating"), wobei, wie bei der erfindungsmäßigen Anordnung, die SCR-Schicht über der Oxidationskatalysatorschicht angeordnet sein kann (z.B. Fig. 4), und die Oxidationskatalysatorschicht Platin, geträgert auf Zeolith [37], umfassen kann, und der Zeolith Zink umfassen kann [36].

Dabei wird allerdings festgelegt, daß das Zink Bestandteil des Zeolithgerüsts ist ("heteroatom-containing aluminosilicate framework" [36]).Allerdings besteht weiter Bedarf nach ASC Katalysatoren, die bei guter Selektivität gegenüber Stickstoff eine gute thermische Stabilität aufweisen und insbesondere nur wenig N₂O bilden. Es wurde nun überraschenderweise gefunden, dass Zeolithe, die Platin und Zink umfassen, die geforderten Eigenschaften aufweisen.

Mit Platin imprägnierte Zn-ZSM-5 Nanokatalysatoren sind in Catalysis Letters 148(2), Juni 2018, für Isomerisierungsreaktionen von Xylolen beschrieben.

Platin und Zink enthaltende Zeolithe vom Strukturtyp LTA zur Oxidation von Ethan sind in Journal of Energy Chemistry, Volume 30, March 2019, Seiten 42-48, offenbart,
Die vorliegende Erfindung betrifft einen Ammoniakoxidationskatalysator, der ein Trägersubstrat der Länge L und Materialien A und B umfasst, wobei
- Material A einen Zeolithen enthält, der Zink und Platin umfasst;
- Material B einen SCR-Katalysator enthält;
- Material B über Material A angeordnet ist; und
- Material A und B verschieden voneinander sind.

Zeolithe sind zwei- oder dreidimensionale Strukturen, als deren kleinste Strukturen SiO₄- und AlO₄-Tetraeder angesehen werden können. Diese Tetraeder fügen sich zu größeren Strukturen zusammen, wobei jeweils zwei über ein gemeinsames Sauerstoffatom verbunden sind. Dabei können Ringe verschiedener Größe gebildet werden, beispielsweise Ringe aus vier, sechs oder auch neun tetraedrisch koordinierten Silizium- oder Aluminiumatomen. Die verschiedenen Zeolithtypen werden häufig über die größte Ringgröße definiert, weil diese Größe bestimmt, welche Gastmoleküle in die Zeolith-struktur eindringen können und welche nicht. Es ist geläufig, großporige Zeolithe mit einer maximalen Ringgröße von 12, mittelporige Zeolithe mit einer maximalen Ringgröße von 10 und kleinporige Zeolithe mit einer maximalen Ringgröße von 8 zu unterscheiden.

Zeolithe werden des Weiteren von der Strukturkommission der International Zeolite Association in Strukturtypen unterteilt, die jeweils mit einem Code aus drei Buchstaben belegt sind, siehe zum Beispiel Atlas of Zeolite Framework Types, Elsevier, 5. Auflage, 2001.

Der Zeolith des Materials A kann großporig, mittelporig oder kleinporig sein. Mit anderen Worten, er weist bevorzugt größte Kanäle auf, die von 6, 8, 9, 10 oder 12 tetraedrisch koordinierten Atomen gebildet werden.

Der Zeolith des Materials A gehört insbesondere einem Strukturtyp ausgewählt aus der Gruppe bestehend aus ABW, ACO, AEI, AEN, AFN, AFT, AFX, ANA, APC, APD, ATT, BEA, BIK, CDO, CHA, DDR, DFT, EAB, EDI, EPI, ERI, ESV, ETL, FAU, FER, GIS, GOO, IHW, KFI, LEV, LTA, MER, MFI, MON, MOR, MWW, NSI, OWE, PAU, PHI, RHO, RTH, SAT, SAV, SIV, SOD, STT, THO, TSC, UEI, VNI, YUG und ZON an.

Der Zeolith des Materials A gehört bevorzugt einem Strukturtyp ausgewählt aus der Gruppe bestehend aus AEI, AFX, BEA, CHA, ERI, FER, KFI, LEV und MFI an.

Besonders bevorzugt gehört der Zeolith des Materials A dem Strukturtypen AEI an.

Besonders bevorzugt gehört der Zeolith des Materials A außerdem dem Strukturtypen AFX an.

Besonders bevorzugt gehört der Zeolith des Materials A außerdem dem Strukturtypen CHA an.

Besonders bevorzugt gehört der Zeolith des Materials A außerdem dem Strukturtypen FER an.

Der Zeolith des Materials A weist insbesondere einen SAR (silica-to-alumina ratio)-Wert von 2 bis 100, insbesondere von 5 bis 50, auf.

Im Rahmen der vorliegenden Erfindung umfasst der Begriff "Zeolith" ausdrücklich keine Aluminiumoxid und Siliziumoxid umfassende Mischoxide, wie sie in der Literatur zum Beispiel als "SiO₂/Al₂O₃" beschrieben sind.

Das Platin liegt im Zeolithen des Materials A bevorzugt als Platin-Kation in der Zeolithstruktur vor, das heißt in ionenausgetauschter Form. Es kann aber auch ganz oder teilweise als Platinmetall und/oder als Platinoxid in der Zeolith-Struktur und/oder auf der Oberfläche der Zeolithstruktur vorliegen. Das Platin kann in Mengen von 0,01 bis 20 Gew.-% vorliegen, bezogen auf die Summe der Gewichte von Zeolith, Zink und Platin und berechnet als Zinkmetall und Platinmetall.

Bevorzugt liegt das Platin in Mengen von 0,5 bis 10, besonders bevorzugt von 0,5 bis 6 Gew.-% und ganz besonders bevorzugt von 0,5 bis 5 Gew.-% vor, bezogen auf die Summe der Gewichte von Zeolith, Zink und Platin und berechnet als Zinkmetall und Platinmetall.

Das Zink liegt im Zeolithen des Materials A bevorzugt als Zink-Kation in der Zeolithstruktur vor, das heißt in ionenausgetauschter Form. Es kann aber auch ganz oder teilweise als Zinkoxid (ZnO) in der Zeolith-Struktur und/oder auf der Oberfläche der Zeolithstruktur vorliegen.

Das Zink kann in Mengen von 0,01 bis 20 Gew.-% vorliegen, bezogen auf die Summe der Gewichte von Zeolith, Zink und Platin und berechnet als Zinkmetall und Platinmetall.

Bevorzugt liegt das Zink in Mengen von 0,5 bis 10, besonders bevorzugt von 0,5 bis 6 Gew.-% und ganz besonders bevorzugt von 0,5 bis 5 Gew.-% vor, bezogen auf die Summe der Gewichte von Zeolith, Zink und Platin und berechnet als Zinkmetall und Platinmetall.

Der Zeolith des Materials A weist bevorzugt ein Masseverhältnis Platin : Zink von 10: 1 bis 1:17, besonders bevorzugt 6:1 bis 1:10 und ganz besonders bevorzugt von 1:2 bis 1:7 auf, wobei Platin als Platinmetall und Zink als Zinkmetall berechnet ist.

Der Zeolith des Materials A kann nach an sich bekannten Methoden hergestellt werden. So wird er zum Beispiel durch Imprägnieren eines Zeolithen, der beispielsweise in der H- oder NH₄-Form vorliegt, mit einer wässrigen Lösung einer Mischung von Platin- und Zinksalzen in den entsprechenden Mengen nach der Incipient Wetness-Methode und anschließender Trocknung und Kalzinierung erhalten. Als wasserlösliches Platinsalz kommt insbesondere Platinnitrat (Pt[NO₃]₂) und als wasserlösliches Zinksalz insbesondere Zinkacetat (Zn[Ac]₂) in Frage. Die Kalzinierung des imprägnierten Zeolithen erfolgt insbesondere bei Temperaturen von 250 bis 550°C.

In einem alternativen Verfahren wird eine wässrige Suspension eines Zeolithen bei alkalischen pH-Werten mit einem Platinsalz, zum Beispiel Pt-TEAH (Tetraethylammonium) versetzt, so dass das Platin am Zeolithen adsorbiert werden kann. Anschließend wird ein saurer pH-Wert eingestellt und Zink zum Beispiel in Form von Zinkacetat zugefügt.

Material B umfasst erfindungsgemäß einen SCR-Katalysator. Dieser SCR-Katalysator kann prinzipiell ausgewählt sein aus allen in der SCR-Reaktion von Stickoxiden mit Ammoniak aktiven Katalysatoren, insbesondere aus solchen, die dem Fachmann auf dem Gebiet der Autoabgaskatalyse als wirksam und gebräuchlich bekannt sind. Dies schließt Katalysatoren vom Mischoxid-Typ ebenso ein, wie Katalysatoren vom Zeolith-Typ. Während Katalysatoren vom Mischoxid-Typ insbesondere VWT-Katalysatoren auf Basis von V₂O₅, WO₃ und TiO₂ sind, umfassen Katalysatoren vom Zeolith-Typ insbesondere Übergangsmetall-ausgetauschte Zeolithe.

In Ausführungsformen der vorliegenden Erfindung werden SCR-Katalysatoren vom Zeolith-Typ, die einen kleinporigen Zeolithen mit einer maximalen Ringgröße von acht tetraedrischen Atomen und ein Übergangsmetall enthalten, verwendet. Solche SCR-Katalysatoren sind beispielsweise in WO2008/106519 A1, WO2008/118434 A1 und WO2008/132452 A2 beschrieben.

Daneben können aber auch groß- und mittelporige Zeolithe verwendet werden, wobei insbesondere solche vom Strukturtyp BEA in Frage kommen. So sind Eisen-BEA und Kupfer-BEA von Interesse.

Besonders bevorzugte Zeolithe gehören den Strukturtypen AEI, AFX, BEA, CHA, KFI, ERI, LEV, MER oder DDR an und sind besonders bevorzugt mit Kobalt, Eisen, Kupfer oder Mischungen aus zwei oder drei dieser Metalle ausgetauscht.

Unter den Begriff Zeolithe fallen hier auch Molsiebe, die bisweilen auch als "zeolithähnliche" Verbindungen bezeichnet werden. Molsiebe sind bevorzugt, wenn sie einem der oben genannten Strukturtypen angehören. Beispiele sind Silicaaluminiumphosphat-Zeolithe, die unter dem Begriff SAPO bekannt sind und Aluminiumphosphat-Zeolithe, die unter dem Begriff AIPO bekannt sind.

Auch diese sind insbesondere dann bevorzugt, wenn sie mit Kobalt, Eisen, Kupfer oder Mischungen aus zwei oder drei dieser Metalle ausgetauscht sind.

Bevorzugte Zeolithe sind weiterhin solche, die einen SAR (silica-to-alumina ratio)-Wert von 2 bis 100, insbesondere von 5 bis 50, aufweisen.

Die Zeolithe bzw. Molsiebe enthalten Übergangsmetall insbesondere in Mengen von 1 bis 10 Gew.-%, insbesondere 2 bis 5 Gew.-%, berechnet als Metalloxid, also als Fe₂O₃ im Falle Eisen-ausgetauschter Zeolithe und als CuO im Falle Kupfer-ausgetauschter Zeolithe.

Bevorzugte Ausführungsformen der vorliegenden Erfindung enthalten als SCR-Katalysatoren einen mit Kupfer, Eisen oder Kupfer und Eisen ausgetauschten Zeolithen, der dem Strukturtyp AEI, BEA, CHA, AFX oder LEV angehört. Entsprechende Zeolithe oder Molsiebe sind beispielsweise unter den Bezeichnungen ZSM-5, Beta, SSZ-13, SSZ-62, Nu-3, ZK-20, LZ-132, SAPO-34, SAPO-35, AIPO-34 und AlPO-35 bekannt, siehe etwa US 6,709,644 und US 8,617,474.

In einer bevorzugten Ausführungsform betrifft die vorliegende Erfindung einen Ammoniakoxidationskatalysator, der ein Trägersubstrat der Länge L und Materialien A und B umfasst, wobei
Material A einen Zeolithen enthält, der Zink und Platin umfasst und der dem Strukturtyp AEI, AFX, BEA, CHA, ERI, FER, KFI, LEV oder MFI angehört; Material B einen SCR-Katalysator enthält, der ein mit Kupfer, Eisen oder Kupfer und Eisen ausgetauschter Zeolith ist, der dem Strukturtyp AEI, BEA, CHA, AFX oder LEV angehört;
Material B über Material A angeordnet ist; und
Material A und Material B verschieden voneinander sind.

Das Trägersubstrat kann ein Durchflusssubstrat oder ein Wandflussfilter sein.

Ein Wandflussfilter ist ein Trägersubstrat, der Kanäle der Länge L umfasst, die sich parallel zwischen einem ersten und einem zweiten Ende des Wandflussfilters erstrecken, die abwechselnd entweder am ersten oder am zweiten Ende verschlossen sind und die durch poröse Wände getrennt sind. Ein Durchflusssubstrat unterscheidet sich von einem Wandflussfilter insbesondere darin, dass die Kanäle der Länge L an ihren beiden Enden offen sind.

Wandflussfilter weisen in unbeschichtetem Zustand beispielsweise Porositäten von 30 bis 80, insbesondere 50 bis 75% auf. Ihr durchschnittlicher Porendurchmesser beträgt in unbeschichtetem Zustand beispielsweise 5 bis 30 Mikrometer.

In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Durchflusssubstrate sind dem Fachmann ebenso wie Wandflussfilter bekannt und sind am Markt erhältlich. Sie bestehen beispielsweise aus Silicium-Carbid, Aluminium-Titanat oder Cordierit.

In einer Ausführungsform der vorliegenden Erfindung liegt Material A in Form einer Beschichtung direkt auf dem Trägersubstrat vor und erstreckt sich über dessen gesamte Länge L oder nur über einen Teil davon, beispielsweise über 20 bis 80% der Länge L. Material B ist bevorzugt ebenfalls in Form einer Beschichtung direkt auf Material A angeordnet und erstreckt sich über die gesamte Länge L.

Im Falle eines Wandflussfilters kann sich die Beschichtung auf den Oberflächen der Eingangskanäle, auf den Oberflächen der Ausgangskanäle und/oder in der porösen Wand zwischen Ein- und Ausgangskanälen befinden.

Erfindungsgemäße Katalysatoren, bei denen die Materialien A und B in Form von Beschichtungen auf dem Trägersubstrat vorliegen, können nach dem Fachmann geläufigen Methoden hergestellt werden, so etwa nach den üblichen Tauchbeschichtungsverfahren bzw. Pump- und Saug-Beschichtungsverfahren mit sich anschließender thermischer Nachbehandlung (Kalzination). Dem Fachmann ist bekannt, dass im Falle von Wandflussfiltern deren durchschnittliche Porengröße und die mittlere Teilchengröße der zu beschichtenden Materialien so aufeinander abgestimmt werden können, dass diese auf den porösen Wänden, die die Kanäle des Wandflussfilters bilden, liegen (auf-Wand-Beschichtung). Die mittlere Teilchengröße der zu beschichtenden Materialien kann aber auch so gewählt werden, dass sich diese in den porösen Wänden, die die Kanäle des Wandflussfilters bilden, befinden, dass also eine Beschichtung der inneren Porenoberflächen erfolgt (in-Wand-Beschichtung). In diesem Fall muss die mittlere Teilchengröße der der zu beschichtenden Materialien klein genug sein, um in die Poren des Wandflussfilters einzudringen.

In einer anderen Ausführungsform der vorliegenden Erfindung ist das Trägersubstrat aus Material A, sowie einer Matrixkomponente gebildet und Material B liegt als Beschichtung auf dem Trägersubstrat vor. Trägersubstrate, Durchflusssubstrate ebenso wie Wandflussfilter, die nicht nur aus inertem Material, wie beispielsweise Cordierit bestehen, sondern die daneben auch ein katalytisch aktives Material enthalten, sind dem Fachmann bekannt. Zu ihrer Herstellung wird eine Mischung aus beispielsweise 10 bis 95 Gew.-% inerter Matrixkomponente und 5 bis 90 Gew.-% katalytisch aktiven Materials nach an sich bekannten Verfahren extrudiert. Als Matrixkomponenten können dabei alle auch sonst zur Herstellung von Katalysatorsubstraten verwendeten inerten Materialien verwendet werden. Es handelt sich dabei beispielsweise um Silikate, Oxide, Nitride oder Carbide, wobei insbesondere Magnesium-Aluminium-Silikate bevorzugt sind.

Das extrudierte Trägersubstrat, das Material A umfasst, kann nach an sich bekannte Verfahren mit Material B beschichtet werden.

In einer weiteren Ausführungsform der vorliegenden Erfindung wird ein Trägersubstrat verwendet, das aus gewellten Blättern aus inerten Materialien aufgebaut ist. Solche Trägersubstrate sind dem Fachmann als "corrugated substrate" bekannt. Geeignete inerte Materialien sind zum Beispiel faserförmige Materialien mit einem durchschnittlichen Faserdurchmesser von 50 bis 250 µm und einer durchschnittlichen Faserlänge von 2 bis 30 mm. Bevorzugt sind faserförmige Materialien hitzebeständig und bestehen aus Siliziumdioxid, insbesondere aus Glasfasern.

Zur Herstellung solcher Trägersubstrate werden zum Bespiel Blätter aus den genannten Fasermaterialien in bekannter Weise gewellt und die einzelnen gewellten Blätter zu einem zylindrischen monolithisch strukturierten Körper mit den Körper durchziehenden Kanälen geformt. Vorzugsweise wird durch Aufschichten einer Anzahl der gewellten Blätter zu parallelen Schichten mit unterschiedlicher Orientierung der Wellung zwischen den Schichten ein monolithisch strukturierter Körper mit einer kreuzweisen Wellungsstruktur geformt. In einer Ausführungsform können zwischen den gewellten Blättern ungewellte, d.h. flache Blätter angeordnet sein.

Substrate aus gewellten Blättern können direkt mit den Materialien A und B beschichtet werden, vorzugsweise werden sie aber zunächst mit einem inerten Material, zum Beispiel Titandioxid, und erst dann mit den katalytischen Materialien beschichtet.

Der erfindungsgemäße Ammoniakschlupfkatalysator kann direkt als solcher als verwendet werden.

Die vorliegende Erfindung betrifft demnach auch ein Verfahren zur Oxidation von in einem Abgasstrom enthaltenen Ammoniak, das dadurch gekennzeichnet ist, dass der Abgasstrom über einen erfindungsgemäßen Ammoniakschlupfkatalysator geleitet wird.

Des Weiteren umfasst die vorliegende Erfindung auch eine Vorrichtung zur Reinigung von Abgasen eines Dieselmotors, die einen erfindungsgemäßen Ammoniakschlupfkatalysator umfasst.

Die erfindungsgemäße Vorrichtung umfasst neben dem erfindungsgemäßen Ammoniakschlupfkatalysator insbesondere einen SCR-Katalysator.

Die folgenden Beispiele 1-5 sind nicht erfindungsgemäß.

### Beispiel 1

Zunächst wird eine gemischte Platinnitrat-/Zinkacetatlösung hergestellt, deren Volumen der 50 prozentigen Wasseraufnahme des Zeolithen (ein handelsüblicher Zeolith vom Strukturtyp CHA) entspricht. Bezogen auf die finale Zusammensetzung des Platin und Zink enthaltenden Zeolithen werden 0,42 Gewichts-% Platin und 0,07 Gewichts-% Zink (Massenverhältnis Pt:Zn = 6:1) in einem mechanischen Mischer auf den Zeolithen aufgetragen. Die anschließende thermische Behandlung umfasst eine Trocknung bei 120 °C, eine Kalzinierung bei 350 °C sowie eine Temperung bei 550 °C an Luft.

In der darauffolgenden Washcoat-Präparation werden 10 % eines handelsüblichen Aluminiumoxidsols (bezogen auf die Gesamtbeladung) zugesetzt und ein damit ein handelsübliches Trägersubstrat aus Keramik mit einer Washcoat-Beladung von 25 g/l beschichtet, welcher letztlich an Luft bei 120 °C getrocknet, bei 350 °C kalziniert und bei 550 °C getempert wird. Der erhaltene Katalysator wird nachstehend K1 genannt.

### Beispiel 2

Beispiel 1 wird wiederholt mit dem Unterschied, dass die Zinkmenge 0,2 Gew.-% beträgt (Massenverhältnis Pt:Zn = 2:1).

Der erhaltene Katalysator wird nachstehend K2 genannt.

### Beispiel 3

Beispiel 1 wird wiederholt mit dem Unterschied, dass die Zinkmenge 0,6 Gew.-% beträgt (Massenverhältnis Pt:Zn = 1:1,5).

Der erhaltene Katalysator wird nachstehend K3 genannt.

### Beispiel 4

Beispiel 1 wird wiederholt mit dem Unterschied, dass die Zinkmenge 2,64 Gew.-% beträgt (Massenverhältnis Pt:Zn = 1:6,6).

Der erhaltene Katalysator wird nachstehend K4 genannt.

### Vergleichsbeispiel 1

Beispiel 1 wird wiederholt mit dem Unterschied, dass kein Zink eingesetzt wird. Der erhaltene Katalysator wird nachstehend VK1 genannt.

### Beispiel 5

Ein handelsüblicher Zeolith vom Strukturtyp CHA wird in Wasser vorgelegt und der pH-Wert auf 10 eingestellt. Sodann wird Pt-TEAH zugegeben und die Suspension 24 h gerührt. Anschließend wird der pH-Wert auf 6 gestellt, Zinkacetat und 10 % Aluminiumoxidsol zugegeben. Das Massenverhältnis Pt:Zn betrug 1:1,7.

Anschließend wird nach einer Linearmahlung ein handelsübliches Trägersubstrat aus Keramik mit einer Washcoatmenge von 25 g/l beschichtet. Die abschließende Temperaturbehandlung an Luft umfasst eine Trocknung bei 120 °C sowie eine Kalzinierung und Temperung bei 350 und 550 °C. Die Gesamtedelmetallkonzentration auf dem finalen Katalysator (nachstehend K5 genannt) liegt bei 0,42 Gewichts-%.

### Vergleichsbeispiel 2

Beispiel 5 wird wiederholt mit dem Unterschied, dass nach Zugabe von Pt-TEAH 20 h gerührt wird und kein Zink eingesetzt wird. Der erhaltene Katalysator wird nachstehend VK2 genannt.

Bestimmung des NH₃-Light Off und der N₂O-Bildung
a) Alterung
   Aus den Katalysatoren K1 bis K5 und VK1 und VK2 wurden jeweils 4 Bohrkerne geschnitten, wovon zwei in frischem Zustand und zwei nach hydrothermischer Alterung (10% H₂O, 10% O₂, Rest N₂) in einem Ofen für 16 Stunden bei 800°C (nachstehend 16H800) gemessen wurden.
b) Testbedingungen im Laborreaktor
   Durch die gemäß a) erhaltenen Bohrkerne wurde in einem Laborreaktor ein synthetisches Testabgas aus 300 ppm NH₃, 5% O₂, 5% H₂O, Rest N₂ (Test A bzw. B) bzw. ein Testabgas aus 300 ppm NH₃, 200 ppm NO, 5% O₂, 5% H₂O, Rest N₂ (Test C bzw. D) mit 1950 L/Stunde geleitet. Dabei wurde die Temperatur des Testabgases nach einer Konditionierungsphase (= 30 K/min von 150 auf 600 °C in 5% O₂, Rest N₂) mit 10K/min von 150 °C auf 600°C erhöht und die NH₃-Umsetzung mittels konventioneller Methode bestimmt.
c) Ergebnisse
   Die folgenden Tabellen zeigen die erhaltenen Ergebnisse:

**Tabelle 1:**

| **Test A: frisch, nur NH₃** | **K1** | **K2** | **K3** | **K4** | **VK1** | **K5** | **VK2** |
|---|---|---|---|---|---|---|---|
| NH₃ T50 /°C | 222 | 221 | 220 | 218 | 228 | 208 | 220 |
| NH₃ Umsatz (350 °C) /% | 99 | 99 | 99 | 99 | 99 | 99 | 98 |
| NH₃ Umsatz (550 °C) /% | 99 | 99 | 99 | 100 | 100 | 100 | 99 |
| NO-Bildung (210 - 400°C) /ppm | 79 | 70 | 77 | 89 | 65 | 113 | 70 |
| NO-Bildung (550 °C) /ppm | 206 | 200 | 206 | 235 | 196 | 225 | 202 |
| N₂O-Bildung (210 - 400 °C) /ppm | 44 | 48 | 48 | 48 | 47 | 35 | 44 |
| N₂O-Bildung max. /ppm | 81 | 86 | 85 | 86 | 87 | 66 | 79 |

**Tabelle 2:**

| **Test B: 16H800, nur NH₃** | **K1** | **K2** | **K3** | **K4** | **VK1** | **K5** | **VK2** |
|---|---|---|---|---|---|---|---|
| NH₃ T50 /°C | 209 | 207 | 205 | 203 | 210 | 194 | 202 |
| NH₃ Umsatz (350 °C) /% | 97 | 97 | 97 | 97 | 97 | 95 | 97 |
| NH₃ Umsatz (550 °C) /% | 98 | 98 | 98 | 98 | 98 | 95 | 98 |
| NO-Bildung (210 - 400 °C) /ppm | 124 | 125 | 128 | 133 | 125 | 155 | 135 |
| NO-Bildung (550 °C) /ppm | 252 | 252 | 251 | 257 | 254 | 265 | 254 |
| N₂O-Bildung (210 - 400 °C) /ppm | 34 | 34 | 33 | 32 | 35 | 25 | 31 |
| N₂O-Bildung max. /ppm | 54 | 55 | 53 | 47 | 54 | 44 | 51 |

**Tabelle 3:**

| **Test C: frisch, NH₃ + NO** | **K1** | **K2** | **K3** | **K4** | **VK1** | **K5** | **VK2** |
|---|---|---|---|---|---|---|---|
| NH₃ T50 /°C | 206 | 202 | 203 | 198 | 206 | 209 | 210 |
| NH₃ Umsatz (350 °C) /% | 99 | 99 | 99 | 99 | 99 | 99 | 99 |
| NH₃ Umsatz (550 °C) /% | 99 | 100 | 99 | 100 | 100 | 100 | 100 |
| NO-Bildung (210 - 400 °C) /ppm | 192 | 175 | 186 | 200 | 168 | 238 | 195 |
| NO-Bildung (550 °C) /ppm | 364 | 354 | 363 | 403 | 346 | 389 | 384 |
| N₂O-Bildung (210 - 400 °C) /ppm | 77 | 82 | 83 | 82 | 84 | 59 | 75 |
| N₂O-Bildung max. /ppm | 149 | 160 | 157 | 162 | 159 | 119 | 138 |

**Tabelle 4:**

| **Test D: 16H800, NH₃ + NO** | **K1** | **K2** | **K3** | **K4** | **VK1** | **K5** | **VK2** |
|---|---|---|---|---|---|---|---|
| NH₃ T50 /°C | 214 | 213 | 214 | 215 | 217 | 212 | 214 |
| NH₃ Umsatz (350 °C) /% | 96 | 97 | 97 | 97 | 96 | 95 | 97 |
| NH₃ Umsatz (550 °C) /% | 98 | 98 | 98 | 98 | 97 | 96 | 98 |
| NO-Bildung (210 - 400 °C) /ppm | 269 | 270 | 273 | 279 | 268 | 304 | 296 |
| NO-Bildung (550 °C) /ppm | 434 | 433 | 433 | 440 | 432 | 453 | 461 |
| N₂O-Bildung (210 - 400 °C) /ppm | 60 | 60 | 57 | 55 | 60 | 42 | 49 |
| N₂O-Bildung max. /ppm | 105 | 105 | 102 | 94 | 102 | 83 | 91 |

Die Versuchsergebnisse zeigen, dass abhängig von Zink-Gehalt der nicht erfindungsgemäßen Katalysatoren K1 bis K4 bzw. K5 die Light Off-Temperaturen für Ammoniak im Vergleich zu den nur Platin enthaltenden Vergleichskatalysatoren VK1 und VK2 fallen. Diese höhere Aktivität führt zwar zu einer höheren NO-Bildung, nicht aber zu einer höheren, sondern zu einer geringeren N₂O-Bildung. Die Zink-Zugabe führt also zu einer höheren NO Selektivität und einer niedrigeren N₂O-Selektivität. Die höhere NO Selektivität ist allerdings nicht nachteilig, da NO von einer SCR-Schicht zu Stickstoff und Sauerstoff umgesetzt werden kann.

### Beispiel 6

Auf den gemäß Beispiel 1 erhaltenen Katalysator K1 wurde in einem zweiten Beschichtungsschritt eine Beschichtung aufgetragen, die einen handels-üblichen Zeolithen vom Strukturtyp CHA, ausgetauscht mit 3 Gew.-% Kupfer (berechnet als CuO), enthielt. Die Washcoat-Beladung der zweiten Schicht betrug 90 g/l.

## Patentansprüche

1. Ammoniakoxidationskatalysator, der ein Trägersubstrat der Länge L und Materialien A und B umfasst, wobei
- Material A einen Zeolithen enthält, der Zink und Platin umfasst;
- Material B einen SCR-Katalysator enthält;
- Material B über Material A angeordnet ist; und
- Material A und B verschieden voneinander sind,
wobei das Zink in ionenausgetauschter Form oder auch ganz oder teilweise als Zinkoxid (ZnO) in der Zeolith-Struktur und/oder auf der Oberfläche der Zeolithstruktur vorliegt.

2. Ammoniakoxidationskatalysator nach Anspruch 1, **dadurch gekennzeichnet, dass** der Zeolith des Materials A einem Strukturtyp ausgewählt aus der Gruppe bestehend aus ABW, ACO, AEI, AEN, AFN, AFT, AFX, ANA, APC, APD, ATT, BEA, BIK, CDO, CHA, DDR, DFT, EAB, EDI, EPI, ERI, ESV, ETL, FAU, FER, GIS, GOO, IHW, KFI, LEV, LTA, MER, MFI, MON, MOR, MWW, NSI, OWE, PAU, PHI, RHO, RTH, SAT, SAV, SIV, SOD, STT, THO, TSC, UEI, VNI, YUG und ZON angehört.

3. Ammoniakoxidationskatalysator nach Anspruch 1 und/oder 2, **dadurch gekennzeichnet, dass** der Zeolith des Materials A einem Strukturtyp ausgewählt aus der Gruppe bestehend aus AEI, AFX, BEA, CHA, ERI, FER, KFI, LEV und MFI angehört.

4. Ammoniakoxidationskatalysator gemäß einem oder mehreren der Ansprüche 1 bis 3, **dadurch gekennzeichnet, dass** in Material A das Platin in Mengen von 0,01 bis 20 Gew.-% vorliegt, bezogen auf die Summe der Gewichte von Zeolith, Zink und Platin und berechnet als Zinkmetall und Platinmetall.

5. Ammoniakoxidationskatalysator gemäß einem oder mehreren der Ansprüche 1 bis 4, **dadurch gekennzeichnet, dass** in Material A das Zink in Mengen von 0,01 bis 20 Gew.-% vorliegt, bezogen auf die Summe der Gewichte von Zeolith, Zink und Platin und berechnet als Zinkmetall und Platinmetall.

6. Ammoniakoxidationskatalysator gemäß einem oder mehreren der Ansprüche 1 bis 5, **dadurch gekennzeichnet, dass** in Material A das Masseverhältnis Platin : Zink 6:1 bis 1:7 ist, wobei Platin als Platinmetall und Zink als Zinkmetall berechnet ist.

7. Ammoniakoxidationskatalysator gemäß einem oder mehreren der Ansprüche 1 bis 6, **dadurch gekennzeichnet, dass** der SCR-Katalysator des Materials B ein Katalysator vom Mischoxid-Typ oder vom Zeolith-Typ ist.

8. Ammoniakoxidationskatalysator gemäß einem oder mehreren der Ansprüche 1 bis 7, **dadurch gekennzeichnet, dass** der SCR-Katalysator des Materials B ein Katalysator vom Zeolith-Typ ist und der Zeolith dem Strukturtypen AEI, AFX, BEA, CHA, KFI, ERI, LEV, MER oder DDR angehört und mit Kobalt, Eisen, Kupfer oder Mischungen aus zwei oder drei dieser Metalle ausgetauscht ist.

9. Ammoniakoxidationskatalysator gemäß einem oder mehreren der Ansprüche 1 bis 8, **dadurch gekennzeichnet, dass** der SCR-Katalysator des Materials B ein mit Kupfer, Eisen oder Kupfer und Eisen ausgetauschter Zeolith ist, der dem Strukturtyp AEI, BEA, CHA, AFX oder LEV angehört.

10. Ammoniakoxidationskatalysator gemäß einem oder mehreren der Ansprüche 1 bis 9, der ein Trägersubstrat der Länge L und Materialien A und B umfasst, wobei
- Material A einen Zeolithen enthält, der Zink und Platin umfasst und der dem Strukturtyp AEI, AFX, BEA, CHA, ERI, FER, KFI, LEV oder MFI angehört;
- Material B einen SCR-Katalysator enthält, der ein mit Kupfer, Eisen oder Kupfer und Eisen ausgetauschter Zeolith ist, der dem Strukturtyp AEI, BEA, CHA, AFX oder LEV angehört;
- Material B über Material A angeordnet ist; und
- Material A und Material B verschieden voneinander sind.

11. Ammoniakoxidationskatalysator gemäß einem oder mehreren der Ansprüche 1 bis 10, **dadurch gekennzeichnet, dass** Material A in Form einer Beschichtung direkt auf dem Trägersubstrat vorliegt und sich über dessen gesamte Länge L oder nur über einen Teil davon erstreckt und Material B in Form einer Beschichtung direkt auf Material A angeordnet ist und sich über die gesamte Länge L erstreckt.

12. Ammoniakoxidationskatalysator gemäß Anspruch 11, **dadurch gekennzeichnet, dass** sich Material A über die gesamte Länge L erstreckt.

13. Ammoniakoxidationskatalysator gemäß Anspruch 11, **dadurch gekennzeichnet, dass** sich Material A über 20 bis 80% der Länge L erstreckt.

14. Verfahren zur Oxidation von in einem Abgasstrom enthaltenen Ammoniak, **dadurch gekennzeichnet, dass** der Abgasstrom über einen Ammoniakoxidationskatalysator gemäß einem oder mehreren der Ansprüche 1 bis 13 geleitet wird.

15. Vorrichtung zur Reinigung der Abgase von Dieselmotoren, die einen Ammoniakoxidationskatalysator gemäß einem oder mehreren der Ansprüche 1 bis 13 umfasst.

## Claims

1. Ammonia oxidation catalyst comprising a carrier substrate of length L and materials A and B, wherein
- material A contains a zeolite comprising zinc and platinum;
- material B contains an SCR catalyst;
- material B is arranged over material A; and
- material A and B are different from each other,
wherein the zinc is present in ion-exchanged form or also wholly or partly as zinc oxide (ZnO) in the zeolite structure and/or on the surface of the zeolite structure.

2. Ammonia oxidation catalyst according to claim 1, **characterized in that** the zeolite of material A has a structure type selected from the group consisting of ABW, ACO, AEI, AEN, AFN, AFT, AFX, ANA, APC, APD, ATT, BEA, BIK, CDO, CHA, DDR, DFT, EAB, EDI, EPI, ERI, ESV, ETL, FAU, FER, GIS, GOO, IHW, KFI, LEV, LTA, MER, MFI, MON, MOR, MWW, NSI, OWE, PAU, PHI, RHO, RTH, SAT, SAV, SIV, SOD, STT, THO, TSC, UEI, VNI, YUG and ZON.

3. Ammonia oxidation catalyst according to claim 1 and/or 2, **characterized in that** the zeolite of material A belongs to a structure type selected from the group consisting of AEI, AFX, BEA, CHA, ERI, FER, KFI, LEV, and MFI.

4. Ammonia oxidation catalyst according to one or more of claims 1 to 3, **characterized in that** in material A, platinum is present in quantities of 0.01 to 20 % by weight, based on the sum of the weights of zeolite, zinc, and platinum and calculated as zinc metal and platinum metal.

5. Ammonia oxidation catalyst according to one or more of claims 1 to 4, **characterized in that** in material A, zinc is present in quantities of 0.01 to 20 % by weight, based on the sum of the weights of zeolite, zinc, and platinum and calculated as zinc metal and platinum metal.

6. Ammonia oxidation catalyst according to one or more of claims 1 to 5, **characterized in that** in material A the mass ratio platinum: zinc is 6:1 to 1:7, wherein platinum is calculated as platinum metal and zinc as zinc metal.

7. Ammonia oxidation catalyst according to one or more of claims 1 to 6, **characterized in that** the SCR catalyst of material B is a mixed oxide type catalyst or a zeolite type catalyst.

8. Ammonia oxidation catalyst according to one or more of claims 1 to 7, **characterized in that** that the SCR catalyst of material B is a zeolite-type catalyst and the zeolite belongs to the structural types AEI, AFX, BEA, CHA, KFI, ERI, LEV, MER or DDR and is exchanged with cobalt, iron, copper or mixtures of two or three of these metals.

9. Ammonia oxidation catalyst according to one or more of claims 1 to 8, **characterized in that** the SCR catalyst of material B is a zeolite exchanged with copper, iron or copper and iron, which belongs to the structural type AEI, BEA, CHA, AFX or LEV.

10. Ammonia oxidation catalyst according to one or more of claims 1 to 9, comprising a carrier substrate of length L and materials A and B, wherein
- material A contains a zeolite comprising zinc and platinum and belonging to the structural type AEI, AFX, BEA, CHA, ERI, FER, KFI, LEV, or MFI;
- material B contains an SCR catalyst which is a zeolite exchanged with copper, iron or copper and iron, belonging to the structural type AEI, BEA, CHA, AFX or LEV;
- material B is arranged over material A; and
- material A and material B are different from each other.

11. Ammonia oxidation catalyst according to one or more of claims 1 through 10, **characterized in that** material A is present in the form of a coating directly on the carrier substrate and extends over its entire length L or only over part thereof, and material B is arranged in the form of a coating directly on material A and extends over the entire length L.

12. Ammonia oxidation catalyst according to claim 11, **characterized in that** material A extends over the entire length L.

13. Ammonia oxidation catalyst according to claim 11, **characterized in that** material A extends over 20 to 80% of the length L.

14. Method for the oxidation of ammonia contained in an exhaust gas stream, **characterized in that** the exhaust gas stream is passed over an ammonia oxidation catalyst according to one or more of claims 1 through 13.

15. Device for cleaning exhaust gases from diesel engines, comprising an ammonia oxidation catalyst according to one or more of claims 1 through 13.

## Revendications

1. Catalyseur d'oxydation d'ammoniac comprenant un substrat porteur de longueur L et des matériaux A et B, dans lequel
- le matériau A contient une zéolite comprenant du zinc et du platine ;
- le matériau B contient un catalyseur SCR ;
- le matériau B est agencé sur le matériau A ; et
- les matériaux A et B sont différents l'un de l'autre,
dans lequel le zinc est présent sous une forme d'échange d'ions ou également totalement ou partiellement sous forme d'oxyde de zinc (ZnO) dans la structure zéolite et/ou sur la surface de la structure zéolite.

2. Catalyseur d'oxydation d'ammoniac selon la revendication 1, **caractérisé en ce que** la zéolite du matériau A a un type de structure choisi dans le groupe constitué par ABW, ACO, AEI, AEN, AFN, AFT, AFX, ANA, APC, APD, ATT, BEA, BIK, CDO, CHA, DDR, DFT, EAB, EDI, EPI, ERI, ESV, ETL, FAU, FER, GIS, GOO, IHW, KFI, LEV, LTA, MER, MFI, MON, MOR, MWW, NSI, OWE, PAU, PHI, RHO, RTH, SAT, SAV, SIV, SOD, STT, THO, TSC, UEI, VNI, YUG et ZON.

3. Catalyseur d'oxydation d'ammoniac selon la revendication 1 et/ou 2, **caractérisé en ce que** la zéolite du matériau A appartient à un type de structure choisi dans le groupe constitué par AEI, AFX, BEA, CHA, ERI, FER, KFI, LEV et MFI.

4. Catalyseur d'oxydation de l'ammoniac selon une ou plusieurs des revendications 1 à 3, **caractérisé en ce que**, dans le matériau A, le platine est présent en quantités de 0,01 à 20 % en poids, sur la base de la somme des poids de zéolite, de zinc et de platine, calculés en tant que zinc métallique et platine métallique.

5. Catalyseur d'oxydation de l'ammoniac selon une ou plusieurs des revendications 1 à 4, **caractérisé en ce que**, dans le matériau A, le zinc est présent en quantités de 0,01 à 20 % en poids, sur la base de la somme des poids de zéolite, de zinc et de platine, calculés en tant que zinc métallique et platine métallique.

6. Catalyseur d'oxydation d'ammoniac selon une ou plusieurs des revendications 1 à 5, **caractérisé en ce que**, dans le matériau A, le rapport massique platine:zinc est de 6:1 à 1:7, dans lequel le platine est calculé en tant que platine métallique et le zinc en tant que zinc métallique.

7. Catalyseur d'oxydation d'ammoniac selon une ou plusieurs des revendications 1 à 6, **caractérisé en ce que** le catalyseur SCR du matériau B est un catalyseur du type oxyde mixte ou un catalyseur du type zéolite.

8. Catalyseur d'oxydation de l'ammoniac selon une ou plusieurs des revendications 1 à 7, **caractérisé en ce que** le catalyseur SCR du matériau B est un catalyseur du type zéolite et la zéolite appartient aux types structuraux AEI, AFX, BEA, CHA, KFI, ERI, LEV, MER ou DDR et est échangée avec du cobalt, du fer, du cuivre ou des mélanges de deux ou trois de ces métaux.

9. Catalyseur d'oxydation d'ammoniac selon une ou plusieurs des revendications 1 à 8, **caractérisé en ce que** le catalyseur SCR du matériau B est une zéolite échangée avec du cuivre, du fer ou du cuivre et du fer, qui appartient au type structurel AEI, BEA, CHA, AFX ou LEV.

10. Catalyseur d'oxydation d'ammoniac selon une ou plusieurs des revendications 1 à 9, comprenant un substrat porteur de longueur L et des matériaux A et B, dans lequel
- le matériau A contient une zéolite comprenant du zinc et du platine et appartenant au type structurel AEI, AFX, BEA, CHA, ERI, FER, KFI, LEV, ou MFI ;
- le matériau B contient un catalyseur SCR qui est une zéolite échangée avec du cuivre, du fer ou du cuivre et du fer, appartenant au type structurel AEI, BEA, CHA, AFX ou LEV ;
- le matériau B est agencé sur le matériau A ; et
- le matériau A et le matériau B sont différents l'un de l'autre.

11. Catalyseur d'oxydation d'ammoniac selon l'une ou plusieurs des revendications 1 à 10, **caractérisé en ce que** le matériau A se présente sous la forme d'un revêtement directement sur le substrat porteur et s'étend sur toute sa longueur L ou seulement sur une partie de celle-ci, et le matériau B est agencé sous la forme d'un revêtement directement sur le matériau A et s'étend sur toute la longueur L.

12. Catalyseur d'oxydation d'ammoniac selon la revendication 11, **caractérisé en ce que** le matériau A s'étend sur toute la longueur L.

13. Catalyseur d'oxydation d'ammoniac selon la revendication 11, **caractérisé en ce que** le matériau A s'étend sur 20 à 80 % de la longueur L.

14. Procédé d'oxydation d'ammoniac contenu dans un courant de gaz d'échappement, **caractérisé en ce que** le courant de gaz d'échappement est passé sur un catalyseur d'oxydation d'ammoniac selon une ou plusieurs des revendications 1 à 13.

15. Dispositif d'épuration des gaz d'échappement de moteurs diesel, comprenant un catalyseur d'oxydation d'ammoniac selon une ou plusieurs des revendications 1 à 13.
